# EUROPEAN PATENT APPLICATION

(11) **EP 1 787 771 A2**
(43) Date of publication of application: **23.05.2007**
(21) Application number: 06008689.9
(22) Date of filing: 26.04.2006
(51) Int. Cl.: B26D 1/18

(54) **Paper cutter**

(30) Priority: 18.11.2005 JP 2005334123
(71) Applicant: Aska Corporation, Ltd., Nagoya-shi Aichi 463-0054 (JP)
(72) Inventor: Dong, Wu Xiao, Kashiwa-shi, Chiba (JP); Toyama, Yuji, Nogoya-shi, Aichi (JP)
(74) Representative: Hartz, Nikolai

(57) **Abstract**

A fixed abutting scale 16 and a movable abutting scale 17 are combined so that the fixed abutting scale 16 is engaged with a recess 191 formed in one end portion of the movable abutting scale 17 and opened at a lower surface of the movable abutting scale 17; the fixed abutting scale 16 is combined with a base 1 so that warp correction ribs 101 are fitted into a groove 165; the groove 165 extending along a longitudinal direction of the fixed abutting scale 16 and opened at lower end of the fixed abutting scale 16; and the warp correction ribs 17 being formed on a top surface 10 of the base 1 and extending in a direction perpendicular to a retainer rail 2.

## Description

The present invention relates to an improvement in a paper cutter, which is used for easily and correctly cutting a sheet-like object to cut, such as a piece of paper, in order to set such a sheet-like object into a desired size or remove an unwanted part of such a sheet-like object.

JP-A-11-333792 has disclosed a paper cutter, which includes a guide rail swingably assembled to a paper stand, and a slider with a blade, the slider being disposed so as to be slidable on the guide rail, and which can cut a piece of paper sandwiched between the guide rail and the paper stand by moving the slider along the guide rail in such a state that the slider is shifted toward the paper stand against an urging force of a spring to protrude the blade.

This kind of paper cutter normally includes a first supporter for a first side of a piece of paper (commonly called a fixed abutting scale) and a second supporter for a second side of the piece of paper (commonly called a movable abutting scale), the first supporter extending perpendicular to a guide rail to make a cut side of the piece of paper rectangular to a side adjacent the cut side, the second supporter being slidable in parallel with the guide rail. When the fixed abutting scale serves as a guide to make the movable abutting scale slidably movable, and when the fixed abutting scale is made of a synthetic resin, the movable abutting scale cannot be slidably moved, keeping a parallel relationship with the guide rail, in some cases, since the fixed abutting scale is likely to be subjected to molding strain because of having a length.

On the other hand, the paper cutter disclosed in the above-mentioned publication includes a stopper, which is engaged with a projection when the guide rail is slanted, the projection formed on a blade holder in the slider. By this arrangement, the blade is prevented from being inadvertently protruded by wrong operation when the guide rail is slanted.

However, this paper cutter has caused problems in, e.g., that when the holder is pushed downward in a case wherein the guide is not slanted, the blade is protruded, and that when the holder is inadvertently pushed downward in case wherein although a piece of paper to cut is put on the paper stand, the piece of paper is improperly set, unnecessary damage is caused in the piece of paper.

It is a first object of the present invention to configure this kind of paper cutter so that a movable abutting scale can be slidably moved, correctly keeping a parallel relationship with a guide rail.

It is another object of the present invention to use a simple structure to reliably avoid trouble wherein the cutting edge of a rotary blade, which is housed in a slider, is inadvertently protruded from a sandwiching surface of a retainer rail forming this type of paper cutter when cutting is unnecessary.

In order to solve the problems stated above, the present invention provides a paper cutter, which comprises the following features (1) to (8):
(1) a base having a support surface formed on a top surface thereof so as to put a sheet-like object to cut thereon;
(2) a retainer rail having a lower surface serving as a sandwiching surface for the object, the retainer rail assembled to the base so as to be movable between a sandwiching position wherein the object put on the support surface is sandwiched between the sandwiching surface and the support surface and a separating position wherein the sandwiching surface and the support surface are pulled away from each other; and
(3) a slider combined with the retainer rail so as to be slidably movable along the retainer rail;
(4) whereby the slider is slidably moved to cut the sandwiched object by a rotary blade accommodated in the slider and formed in a circular shape; the paper cutter further comprising:
(5) a fixed abutting scale made of a synthetic resin and extending on the top surface of the base in a direction perpendicular to the retainer rail; and
(6) a movable abutting scale extending parallel to the retainer rail, the movable abutting scale being slidably movable for obtaining a variable pitch between the retainer rail and the movable abutting scale;
(7) wherein the fixed abutting scale and the movable abutting scale are combined so that the fixed abutting scale is engaged with a recess formed in one end portion of the movable abutting scale and opened at a lower surface of the movable abutting scale; and
(8) wherein the fixed abutting scale is combined with the base so that warp correction ribs are fitted into a groove;
   the groove extending along a longitudinal direction of the fixed abutting scale and opened at a lower end of the fixed abutting scale; and
   the warp correction ribs being formed on the top surface of the base and extending in a direction perpendicular to the retainer rail.

If the fixed abutting scale is integrally made of a synthetic resin, molding strain is likely to be caused to deform the fixed abutting scale in a curved shape according to the length of the fixed abutting scale as viewed in a plan view. When such molding strain is caused, the movable abutting scale cannot be slidably moved along the fixed abutting scale, being parallel to the retainer rail. However, in this mode, even if the fixed abutting scale is subjected to molding strain, the fixed abutting scale can be assembled to the base, with the molding strain corrected, by the warp correction ribs, which extend in the direction perpendicular to the retainer rail disposed on the top surface of the base.

The movable abutting scale may have a stopper accommodated therein so that the stopper is urged so as to be constantly pressed against a first lateral surface of the fixed abutting scale from a side close to a first lateral wall of the recess, with which the fixed abutting scale being engaged. Further, the stopper may be pressed against the fixed abutting scale to press a second lateral surface of the fixed abutting scale against a second lateral wall of the recess.

In this mode, the movable abutting scale can be set so as to form a right angle with the fixed abutting scale at a desired position in the longitudinal direction of the fixed abutting scale since the second lateral wall of the recess is pressed against the second lateral surface of the fixed abutting scale by the stopper, which is urged to be pressed against the first lateral surface of the fixed abutting scale. When the movable abutting scale thus set is shifted in a direction opposite the urging direction of the stopper, it is possible to release the pressure of the second lateral surface of the fixed abutting scale on the second lateral wall of the recess. By maintaining the state wherein the pressure of the second lateral surface of the fixed abutting scale on the second lateral wall is released, the movable abutting scale can be slidably moved to a desired position on the base, being guided by the fixed abutting scale. When the shifting operation of the movable abutting scale against the urging force is stopped after completion of the slide movement, the fixed abutting scale is again sandwiched between the stopper and the second lateral wall of the recess by the urging force of the stopper, and the movable abutting scale is stably set again at the desired position.

The fixed abutting scale may have an overhang formed on an upper portion thereof in an entire longitudinal direction thereof. Further, the movable abutting scale may have a stopper and a button accommodated in one end portion thereof, the stopper having a bumping part constantly urged to be pressed against the overhang of the fixed abutting scale from below, and the button being pressed against the stopper to press the stopper downward against the urging force when the button is depressed.

In this mode, the movable abutting scale can be set so as to form a right angle with the fixed abutting scale at desired position in the longitudinal direction of the fixed abutting scale by the stopper, which is urged to press, from below, a bumping portion against the overhang of the fixed abutting scale. When the bottom is depressed in this state, the stopper can be pressed down against the urging force to release the pressure of the bumping portion of the stopper on the overhang. By maintaining the state wherein the pressure is released, the movable abutting scale can be slidably moved to a desired position on the base, being guided by the fixed abutting scale. When the depressing operation of the bottom is stopped after completion of the slide movement, the bumping portion of the stopper is pressed against the overhang of the fixed abutting scale by the urging force, and the movable abutting scale is stably set again in the desired position.

The paper cutter may further comprise the top surface of the base having a dimple formed thereon at a corner for easy engagement with a finger, the corner being positioned at an intersection where a first side of the object to cut, which is parallel to the retainer rail disposed on the top surface, a second side of the object to cut, which is adjacent the first side and perpendicular to the retainer rail, and the object having one side perpendicular to the retainer rail positioned to the fixed abutting scale.

In this mode, even if a portion of an object to cut, which is left on the support surface after having been cut in such a state that the object has been positioned on the support surface of the base, sticks to the support surface, that portion can be easily peeled off by making use of a proper dimple in this mode.

The slider may comprise:
a slider base including an engageable portion engageable with the retainer rail;
a mount combined with the slider base so as to be vertically movable and including a shaft, which is fitted into a shaft hole formed in a front central portion of the rotary blade, and which rotatably supports the rotary blade;
an urging device, which constantly urges the mount toward a lifted position wherein a cutting edge of the rotary blade, which is mounted to the mount, is prevented from projecting from the sandwiching surface of the retainer rail; and
a slider cover detachably combined with the slider base so as to cover a front side of the slider base;
the slider base further including a slider lock, the slider lock comprising a head portion for operation and a leg portion and being combined with the slide base so as to be selectively and slidably displaced between a locked position and an unlocked position;
the mount having a passage formed therein, the passage comprising au upper compartment, a lower compartment, and a locking shoulder formed between the upper compartment and the lower compartment so as to receive the leg portion of the slider lock, the locking shoulder facing downward;
whereby when the slider lock is set in the locked position, the leg portion of the slider lock is located under the locking shoulder in the lower compartment of the passage, and when the slider lock is set in the unlocked position, the leg portion of the slider lock is located so as to be capable of being inserted into the upper compartment of the passage by depressing the mount toward a lower position against an urging force of the urging device.

In this mode, even if the mount, which is located in the lifted position by the urging force of the urging device, is depressed against the urging force when the slider lock is set in the locked position, the mount is prevented from being moved since the leg portion is located under the locking shoulder. By this arrangement, even if the mount is inadvertently depressed, the lower edge of the rotary blade is prevented from projecting from the sandwiching surface of the retainer rail when it is not necessary to cut an object to cut. When the mount, which is positioned in the lifted position by the urging force of the urging device, is depressed against the urging force when the slider lock is set in the unlocked position, the mount is moved to protrude the lower edge of the rotary blade from the sandwiching surface of the retainer rail since the leg portion is displaced into a position to be capable of being inserted into the upper compartment. When the slider is moved along the retainer rail in this state, an object to cut, which is retained by the retainer rail positioned in the sandwiching position, can be cut.

The slider cover may accommodate:
a button combined with the slider cover so as to be selectively and slidably displaced between an engagement position and a disengagement position, and having an engageable leg projecting from a rear surface of the slider cover; and
an urging device, which constantly urges the button toward the engagement position;
the slide base may have an engageable hole formed in a front surface thereof so as to receive an engageable leg of the button displaced to the disengagement position and so as to be engaged with the engageable leg when the button is moved to the engagement position by an urging force of the urging device.

In this mode, when the button is depressed to be selectively and slidably displaced toward the disengagement position against the urging force of the urging device, the slider cover can be detached from the slider base. Accordingly, the rotary blade supported by the mount can be released from capture by the slider cover, easily bringing about a state to exchange the rotary blade with a new one. After exchange of the rotary blade, the button is pressed into the disengagement position, and the engageable leg of the button is introduced into the engageable hole of the slider base. When the button is released from this pressing operation, the button is slidably displaced to the engagement position by the urging force of the urging device, brining about, by one-touch operation, a position with the new rotary blade captured by the slider cover.

The paper cutter may further comprise a replacement tool for the rotary blade, which has a permanent magnet disposed on one end portion thereof to be attracted to a front side of the rotary blade and a gripper formed on a portion close to the other end thereof.

In this mode, the rotary blade, which is supported by the front surface of the mount, can be detached from the mount without being touched by a hand, by causing the permanent magnet of the replacement tool to attract the front side of the rotary blade, followed by moving the rotary blade forward so as to dismount the shaft of the mount from the shaft hole of the rotary blade. After that, a new rotary blade can be set on the shaft of the mount without being touched by a hand, by causing the permanent magnet of the replacement tool to attract the front side of the new rotary blade. After setting, only the new rotary blade can stay on the front surface of the mount by operating the replacement tool so as to rip the permanent magnet from the front side of the rotary blade.

In accordance with the paper cutter of the present invention, even if the fixed abutting scale, which guides the movable abutting scale, is subjected to molding strain, the movable abutting scale can be slidably moved, correctly keeping a parallel relationship between the movable abutting scale and the retainer rail, since the fixed abutting scale can be assembled to the base with the molding strain being corrected.

As long as the slider lock is set in the locked position wherein the leg portion of the slider lock is located under the locking shoulder of the mount, the cutting edge of the rotary blade is prevented from projecting the sandwiching surface of the retainer rail even if the mount is depressed. As the result, it is possible to reliably avoid, with a simple structure, a case wherein the cutting edge of the rotary blade is inadvertently protruded when the retainer rail is moved to a separating position, and a case wherein an object to cut is unnecessarily damaged by inadvertently depressing the mount in such a state that the object to cut has not properly set on the base.

In the drawings:
Fig. 1 is a schematic perspective view of a paper cutter;
Fig. 2 is a schematic plan view of the paper cutter;
Fig. 3 is a cross-sectional view of essential parts of the paper cutter (with a mount 32 being set in a lifted position);
Fig. 4 is a cross-sectional view of the essential parts (with the mount 32 being set in a lower position);
Fig. 5 is a perspective view of a slider 3 (with a slider cover 34 being detached);
Fig. 6 is a perspective view of the slider 3 (viewed from an opposite side of Fig. 5);
Fig. 7 is a perspective view showing how to use a replacement tool 4;
Fig. 8 is an exploded perspective view of the replacement tool 4;
Fig. 9 is an exploded perspective view of the slider 3;
Fig. 10 is an exploded perspective view of the slider 3 (viewed from an opposite side of Fig. 9);
Fig. 11 is an exploded perspective view of essential parts of the slider 3;
Fig. 12 is an exploded perspective view of the essential parts of the slider 3;
Fig. 13 is a perspective view of essential parts of the paper cutter;
Fig. 14 is an exploded perspective view of a movable abutting scale 17;
Fig. 15 is a cross-sectional view of essential parts of the paper cutter;
Fig. 16 is a cross-sectional view of the essential parts of the paper cutter;
Fig. 17 is a perspective view of essential parts of a paper cutter (in an embodiment different from that shown in Fig. 13);
Fig. 18 is an exploded perspective view of a movable abutting scale 19;
Fig. 19 is a cross-sectional view of essential parts of a paper cutter (mainly showing the movable abutting scale 19);
Fig. 20 is a cross-sectional view of essential parts of the paper cutter (viewed at different position from Fig. 19 by an angle of 90 deg.);
Fig. 21 is a cross-sectional view of the essential parts of the paper cutter (mainly showing the movable abutting scale 19);
Fig. 22 is the cross-sectional view of the essential parts of the paper cutter (viewed at a different position from Fig. 21 by an angle of 90 deg.);
Fig. 23 is a perspective view of essential parts of the paper cutter (showing a modified embodiment of fixed abutting scale 16);
Fig. 24 is a perspective view of essential parts of the paper cutter; and
Fig. 25 is a bottom view of the fixed abutting scale 16.

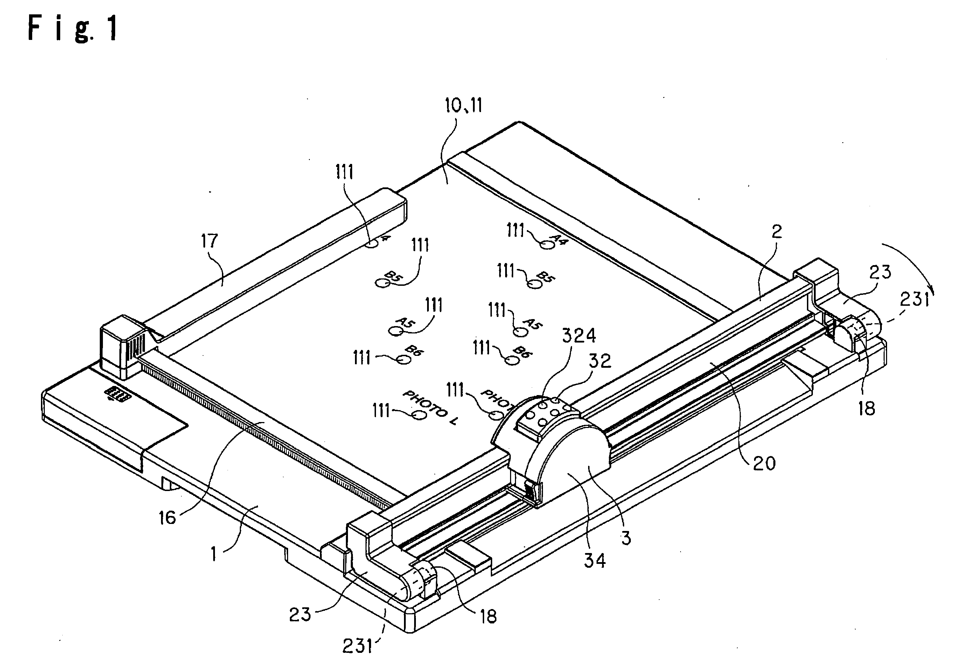

Now, preferred embodiments of the present invention will be described, referring to Figs. 1 to 25.

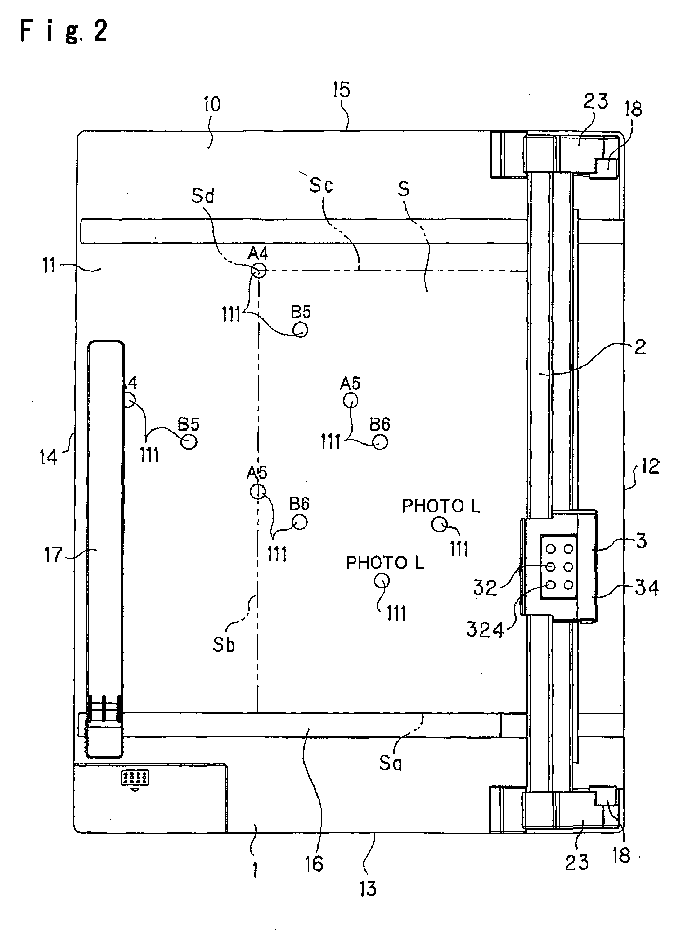

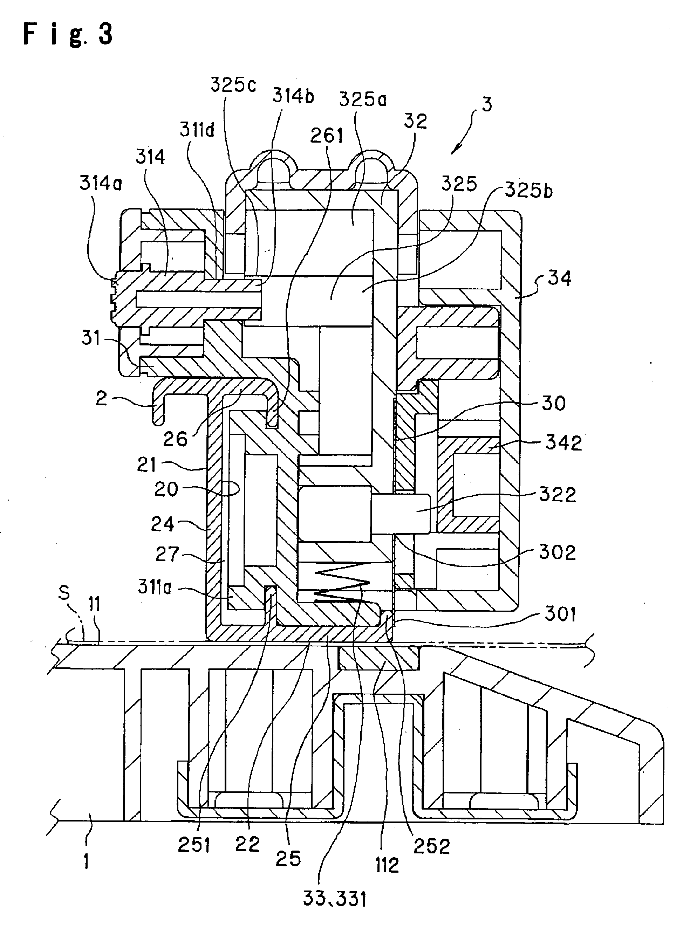

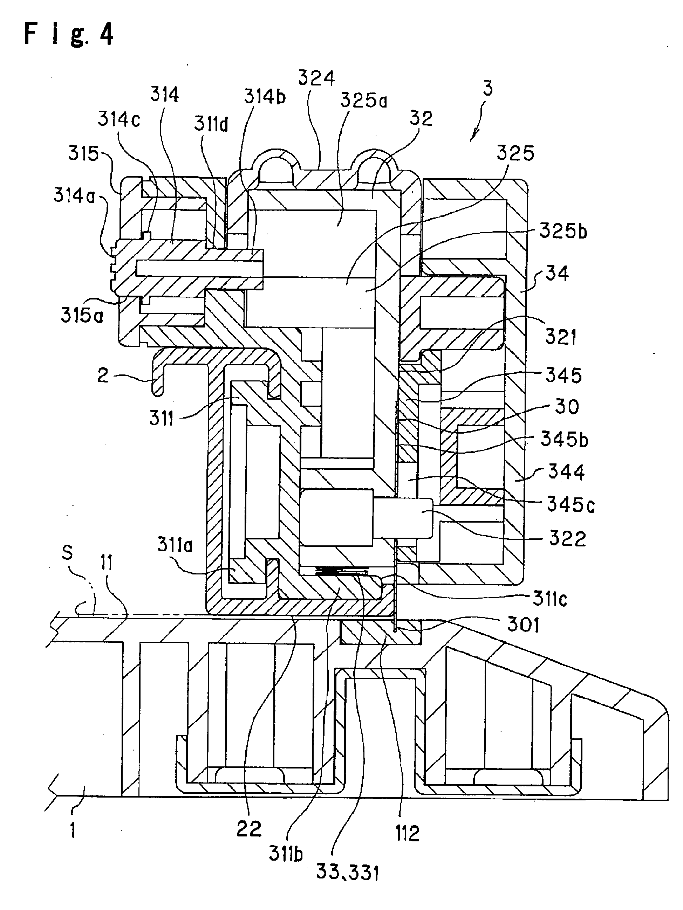

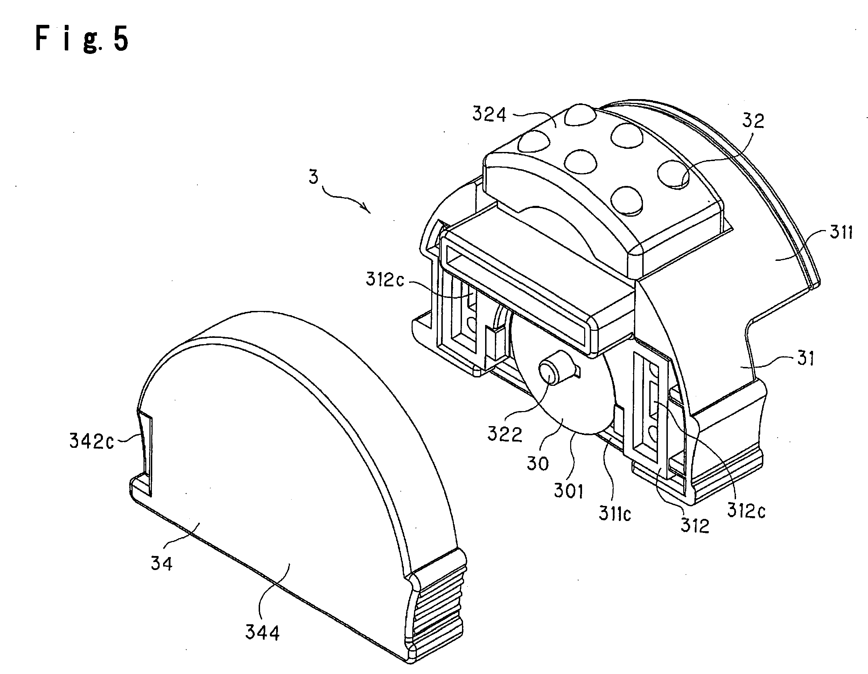

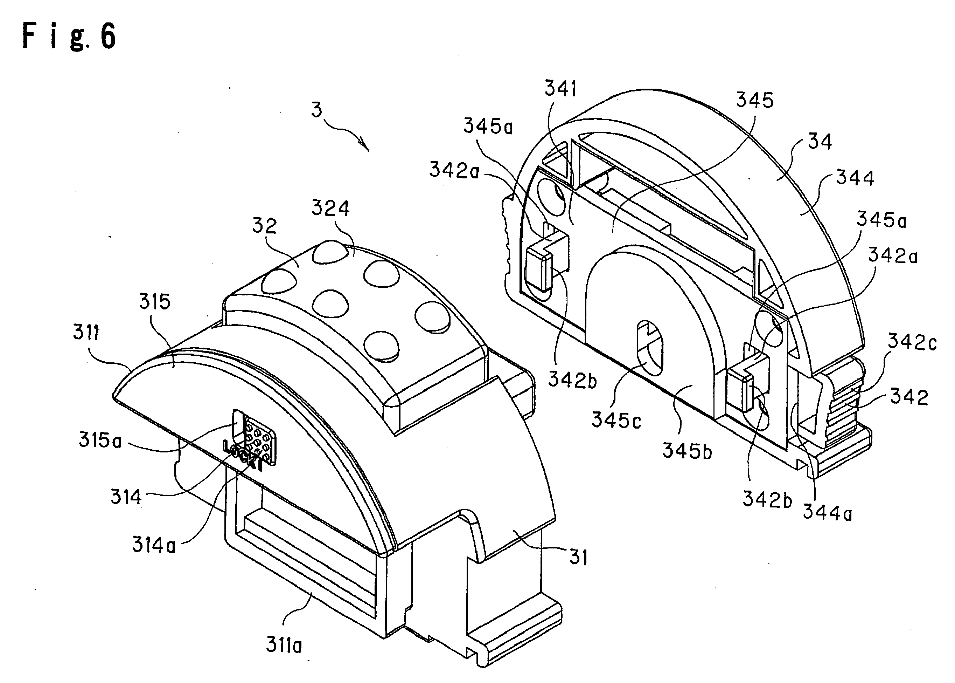

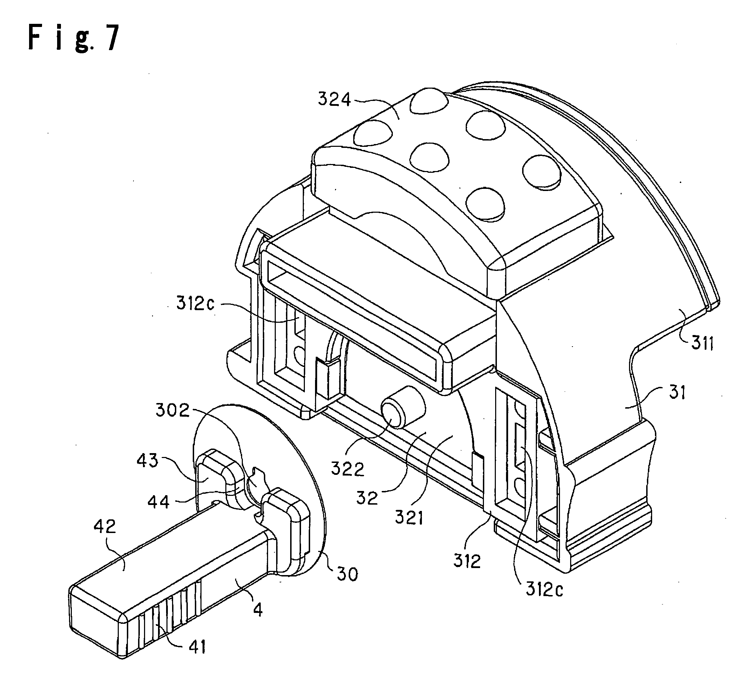

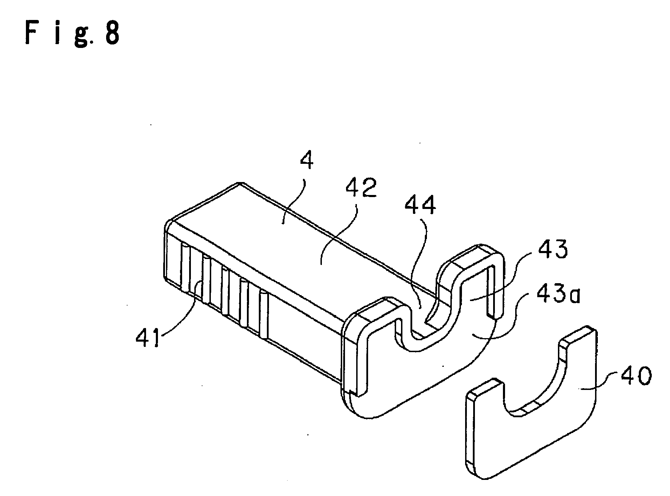

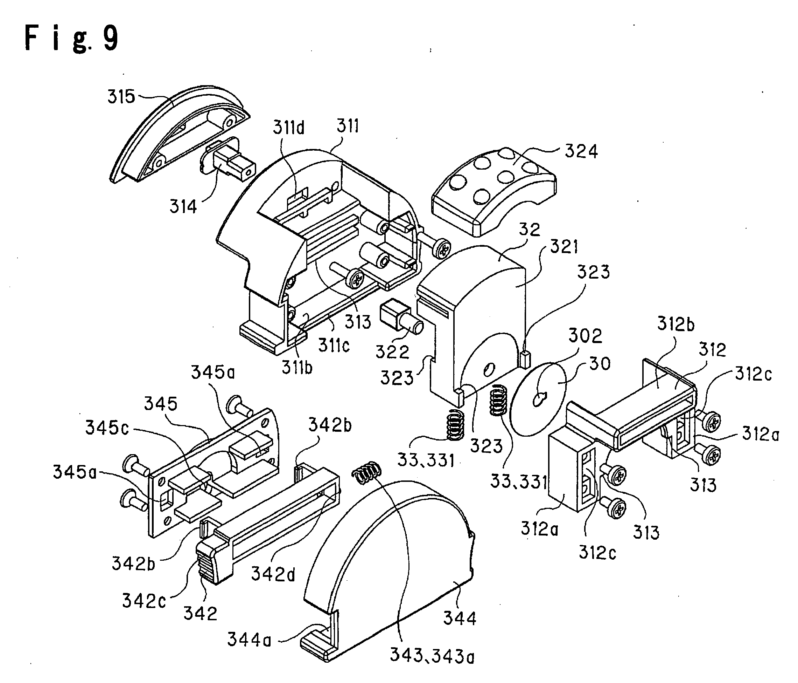

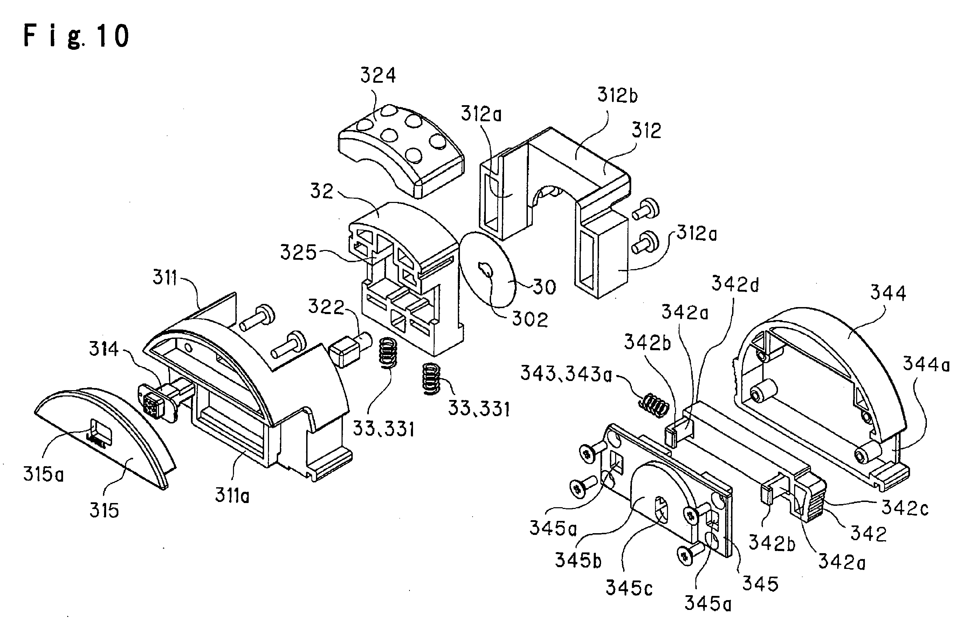

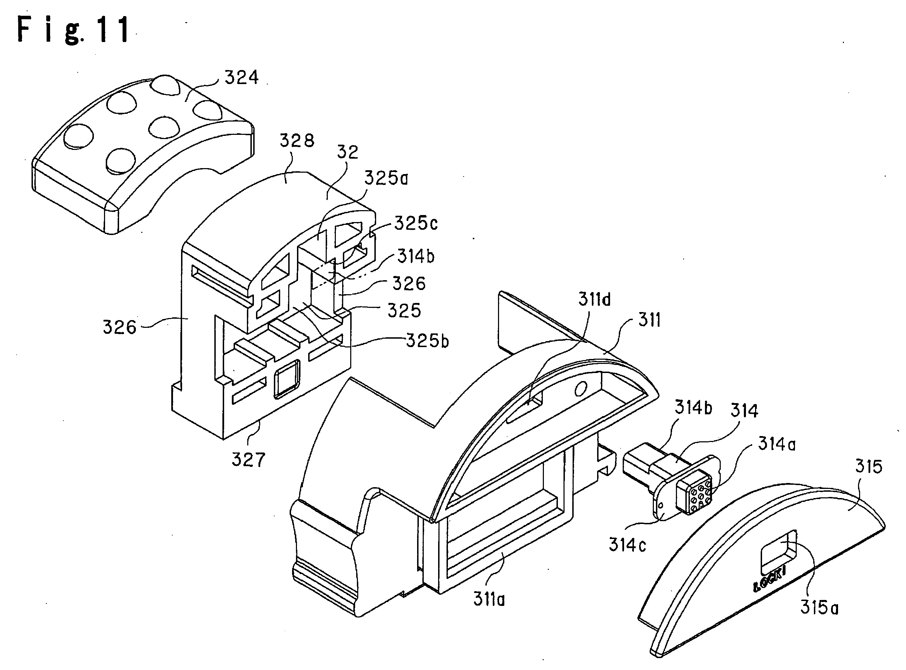

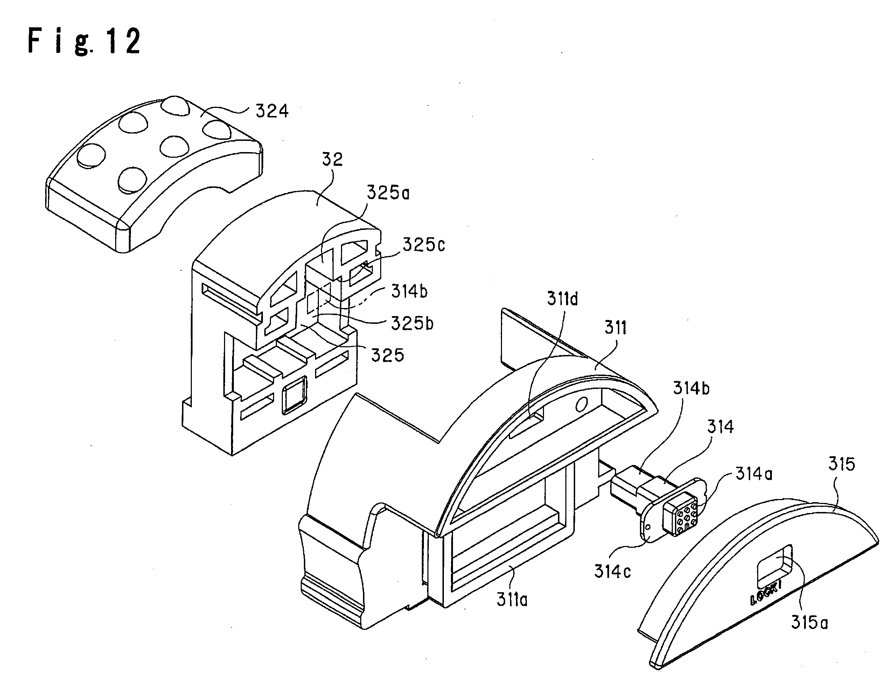

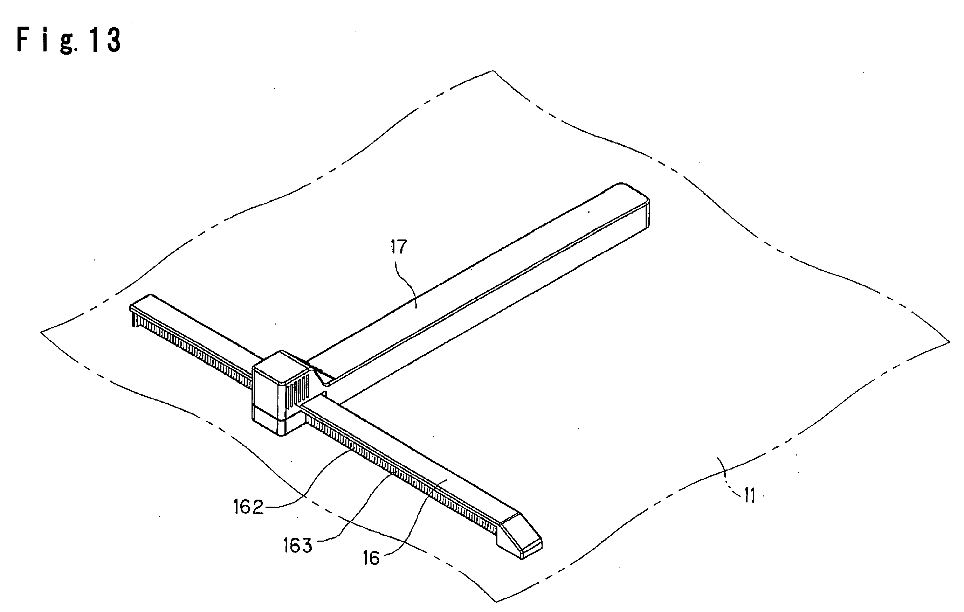

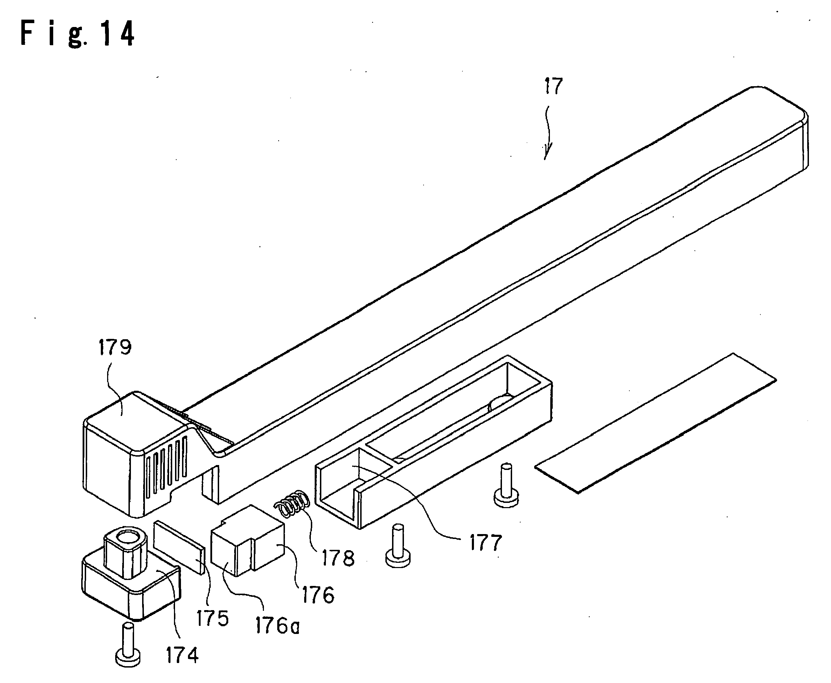

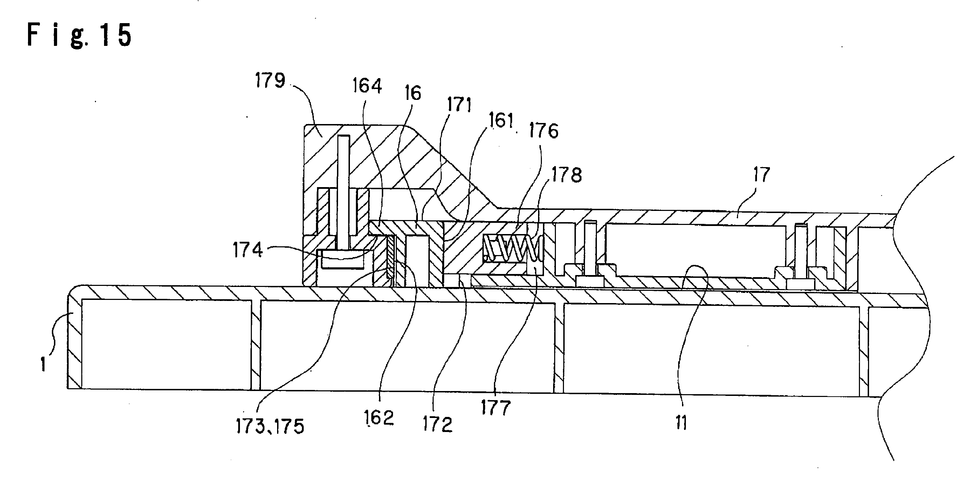

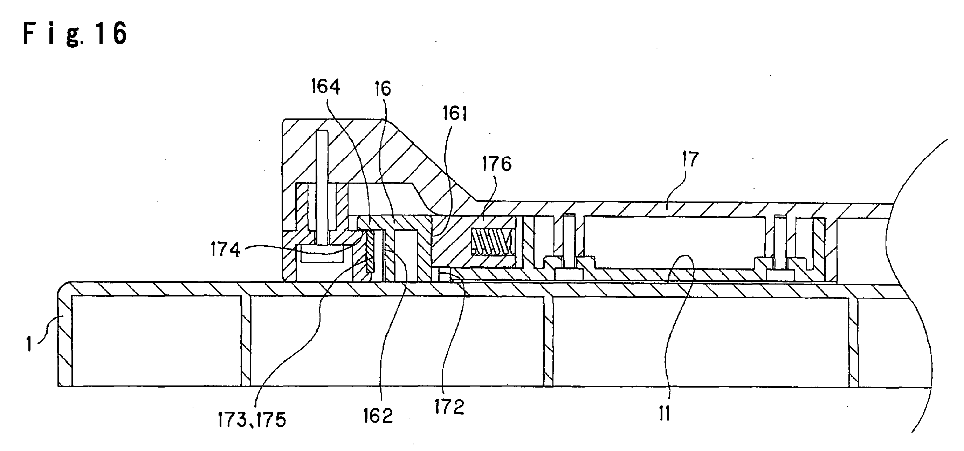

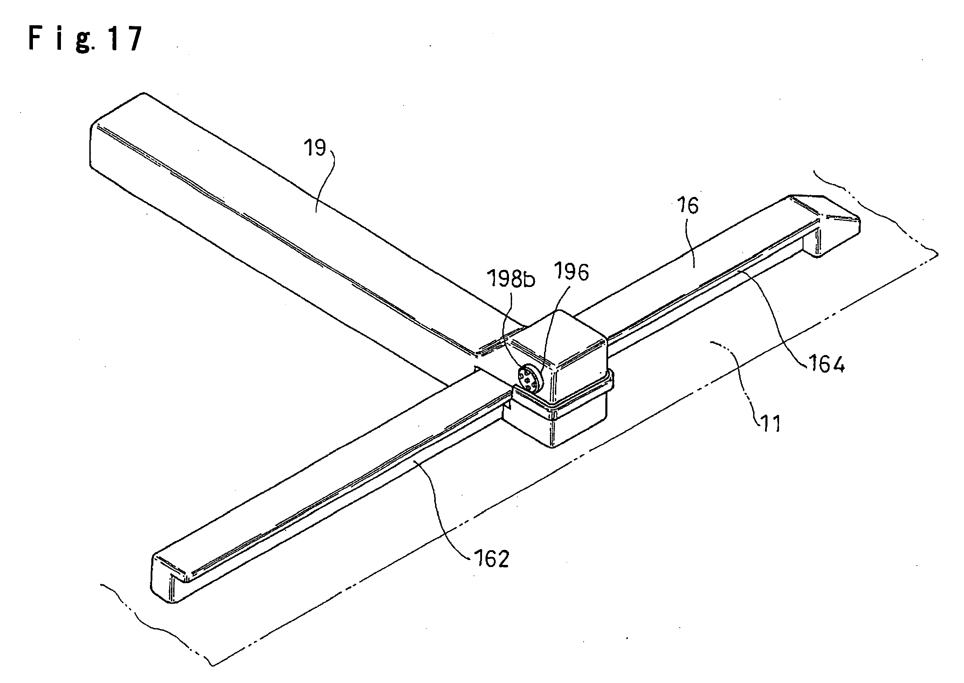

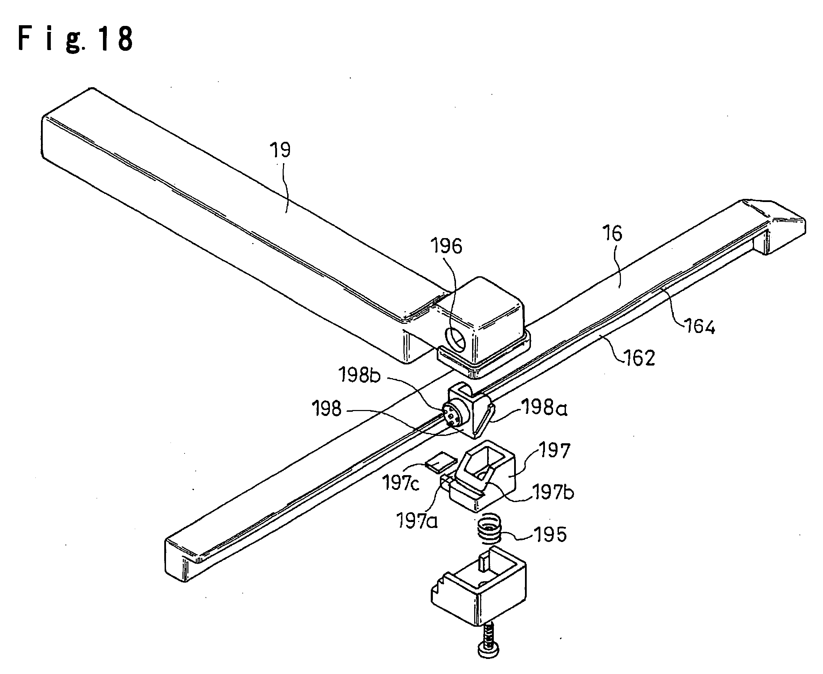

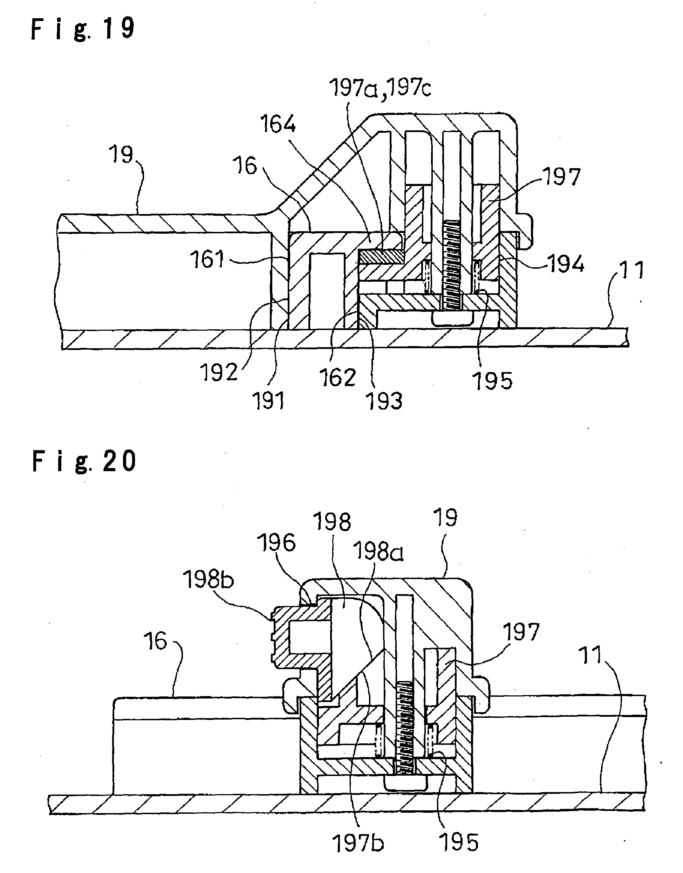

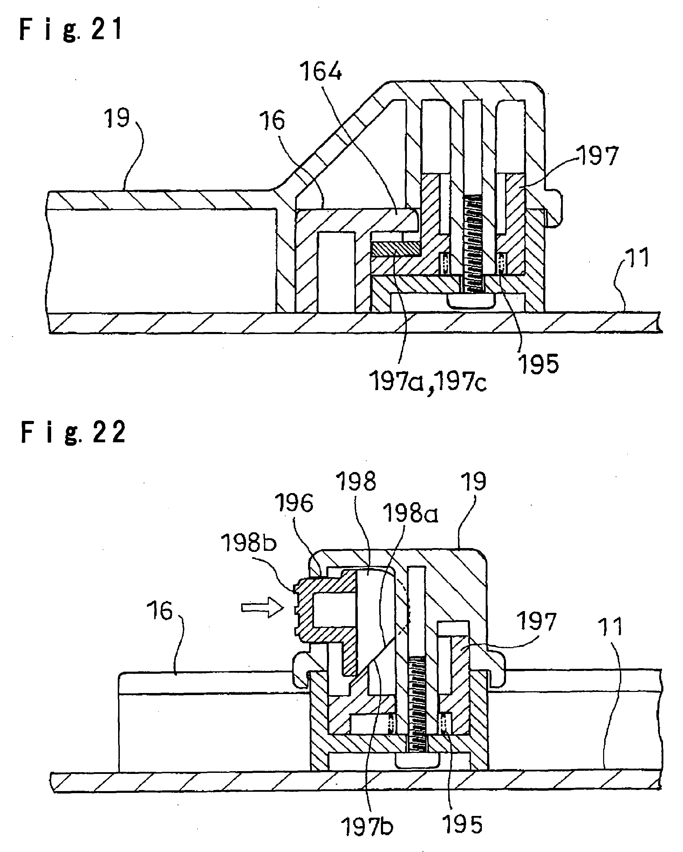

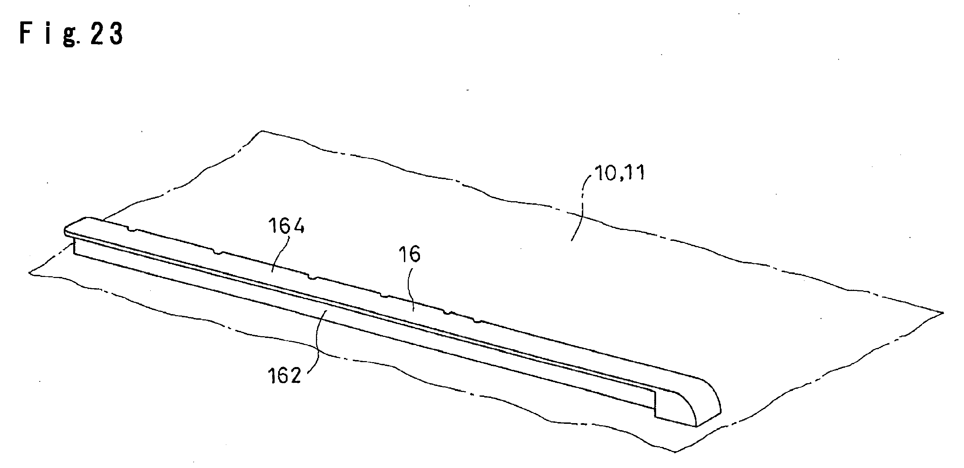

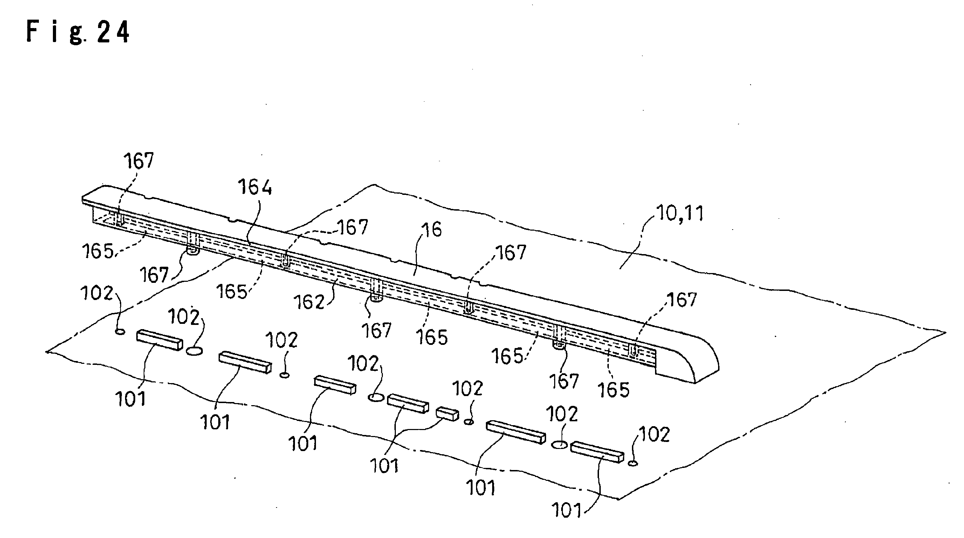

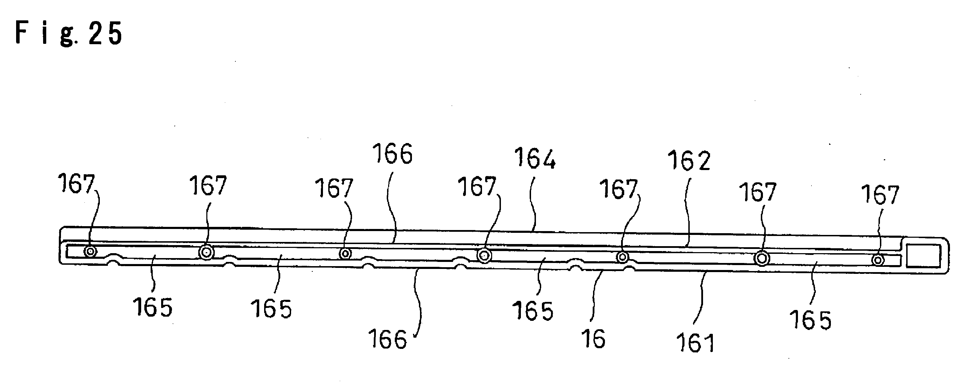

Figs. 1 and 2 show the entire structure of the paper cutter according to an embodiment of the present invention. Figs. 3 and 4 show the paper cutter in vertical cross-sectional views at a position with a slider 3 disposed thereat in order to easily understand the internal structure of the slider having a rotary blade 30. Figs. 5 and 6 show a state wherein the slider has a slider cover 34 removed from a slider base 31. Fig. 7 shows a state wherein the rotary blade 30 is replaced with a new one by use of a replacement tool 4 with the slider cover 34 being removed. Fig. 8 shows parts forming the replacement tool 4 in a disassembled state. Figs. 9 and 10 show parts forming the slider 3 in a disassembled state. Fig. 11 shows essential parts of the slider 3 in a disassembled state in order to easily understand the positional relationship between a slider lock 314 and a locking shoulder 325c when the slider lock 314 prevents a mount with the rotary blade 30 supported thereon from being pushed downward, the position of a leg portion 314b of the slider lock 314 in a passage 325 of the mount 32 being indicated by an imaginary line in such a case. Fig. 12 indicates the position of the leg portion 314b of the slider lock by an imaginary line in a similar way when the mount can be pushed downward. Fig. 13 shows a fixed abutting scale 16 and a movable abutting scale 17 mounted to a base 1. Fig. 14 shows parts forming the movable abutting scale 17 in a disassembled state. Figs. 15 and 16 show essential parts of the fixed abutting scale 16 and the movable abutting scale 17 in a cross-sectional view in order to easily understand how the fixed abutting scale 16 and the movable abutting scale 17 are combined together. In particular, Fig. 16 shows a state wherein the movable abutting scale 17 is operated to make the movable abutting scale 17 slidable along a longitudinal direction of the fixed abutting scale 16. Fig. 17 shows a different mode of the movable abutting scale 19, which may be combined with the fixed abutting scale 16 mounted to the base 1. Fig. 18 shows parts forming the movable abutting scale 19 according to the different mode in a disassemble state. Figs. 19 to 22 show essential parts of the fixed abutting scale 16 and the movable abutting scale 19 in a cross-sectional view in order to easily understand how both abutting scales are combined together. In particular, Figs. 21 and 22 shows a state wherein an operating part 198b of the movable abutting scale 19 is operated to make the movable abutting scale 19 slidable along the longitudinal direction of the fixed abutting scale 16. Figs. 23 to 25 show a different mode of the fixed abutting scale 16, which is mounted to the base 1. Fig. 24 shows a state wherein this mode of fixed abutting scale 16 is separated from the base 1, and Fig. 25 shows this mode of fixed abutting scale as seen from the bottom side.

The paper cutter according to this embodiment can easily and correctly cut a sheet-like object to cut S, such as a piece of paper, in order to set such a sheet-like object into a desired size or to remove an unnecessary part of such a sheet-like object. The paper cutter according to this embodiment can also easily and correctly cut a plurality of sheet-like objects to cut S, the sheet-like objects being put one after another.

The paper cutter includes:
(1) the base 1,
(1) a retainer rail 2, and
(3) the slider 3.

### (Base 1)

The base 1 is configured to have a large part of a top surface formed as a support surface 11 for a sheet-like object to cut S.

In the shown embodiment, the above-mentioned base 1 is configured as a board, which is substantially rectangular in a plan view.

The retainer rail 2 is disposed on the top surface 10 of the base 1 along a first long side 12 of the base 1. The fixed abutting scale 16, which will be described in detail later, is disposed on the top surface 10 of the base 1 along a first short side 13 of the base 1, which is adjacent the first long side 12. Additionally, the movable abutting scale 17, which will be described in detail later, is disposed on the top surface 10 of the base 1 so as to be parallel to the retainer rail 2. When an object to cut S, which has a first side Sa and a second side Sb adjacent the first side, is put on the top surface 10 so that the first side Sa, which is perpendicular to the retainer rail 2, is positioned at the fixed abutting scale 16 on the top surface 10 of the base 1 and that the second side Sb, which is parallel to the retainer rail 2, is positioned at the movable abutting scale 17, and when the slider 3 is moved along the retainer rail 2 in this situation, the object to cut S thus positioned can be separated into an extra portion and the other portion at a position just under a front end of the retainer rail 2 by the rotary blade 30, which is housed in the slider 3 and will be described in detail later, the extra portion of the object passing beyond under the retainer rail 2 and extending toward the first long side 12 of the base 1.

In this embodiment, the support surface 11 of the base 1 has a dimple 111 formed thereon at a corner Sd for easy engagement with a finger, the corner Sd being positioned at the intersection where the second side Sb of the object to cut S, which is parallel to the retainer rail 2 disposed on the support surface 11, and a third side Sc of the object to cut S, which is adjacent the second side Sb and perpendicular to the retainer rail 2.

In the shown embodiment, the dimple 111 is formed as a dent, which is substantially circular in a plan view. The dimple 111 is formed at a plurality positions on the support surface 11. Each of the dimples 111 is formed so as to be located at a corner Sd of a portion of an object to cut S, which is left on the support surface 11 of the base 1 after cutting, the object comprising a sheet having standardized width and length. In the shown embodiment, each of the dimples 111 is formed at the position where the corner Sd is located when a portion to be left comprises a vertical A4 size sheet, a vertical B5 size sheet, a vertical A5 size sheet, a vertical B6 size sheet or a vertical L size photo sheet, and at the position where the corner Sd is located when a portion to be left comprises a horizontal A4 size sheet, a horizontal B5 size sheet, a horizontal A5 size sheet, a horizontal B6 size sheet or a horizontal L size photo sheet (see Figs. 1 and 2).

By this arrangement, even if a portion of an object to cut S, which is left on the support surface 11 after having been cut in such a state that the object has been positioned on the support surface 11 of the base 1, sticks to the support surface 11, that portion can be easily peeled off by making use of a proper dimple 111 in this embodiment.

In this embodiment, the top surface 10 of the base 1 has the fixed abutting scale 16 disposed thereon so as to extend in a direction perpendicular to the retainer rail 2 and the movable abutting scale 7 disposed thereon so as to extend parallel to the retainer rail 2 and to be slidably movable for obtaining a variable pitch between the retainer rail 2 and the movable abutting scale 7.

In the shown embodiment, the fixed abutting scale 16 is configured to be parallel to the first short side 13 of the base 1 and to form a wide rib, which is disposed on the top surface 10 of the base 1, being slightly away from the first shot side 13. The fixed abutting scale 16 is configured to have a length, which substantially extends between a rear lateral portion 21 of the retainer rail 2 and a second long side 14 of the base 1.

On the other hand, the movable abutting scale 17 is configured to be parallel to the first long side 12 of the base 1 and to form a bar, which has a slightly shorter length than the support surface 11.

In this embodiment, the fixed abutting scale 16 and the movable abutting scale 17 are combined together so that the fixed abutting scale 16 is incorporated into an open recess 171, which is formed on a lower surface of one end of the movable abutting scale 17.

In shown embodiment, the fixed abutting scale 16 has a first lateral surface 161 facing toward the support surface 11 and a second lateral surface 162 facing toward the first short side 13 of the base 1, and has an upper portion formed with an overhang 164 projecting toward the first short side 13 throughout a longitudinal direction thereof. The second lateral surface 162, which is disposed under the overhang 164, is formed as a knurled surface 163 having a high friction resistance, which comprises a plurality of small ridges formed on the second lateral surface 162 throughout the longitudinal direction of the fixed abutting scale 16 and extending throughout the entire vertical direction of the second lateral surface.

On the other hand, the movable abutting scale 17 is configured to engage the fixed abutting scale 16 with the recess 171 in such a state that the fixed abutting scale has a lower surface brought into contact with the support surface 11, and the movable abutting scale 17 is configured to be slidable along the longitudinal direction of the fixed abutting scale 16 in this state, being parallel to the retainer rail 2 all the time. In other words, the recess 171 is opened outward at both lateral surfaces of the movable abutting scale 17. The recess is configured to have a first lateral wall 172 facing the first lateral surface 161 of the fixed abutting scale 16, spaced from a second lateral wall 173 facing the second lateral surface 162 of the fixed abutting scale 16 by a slightly larger pitch than the fixed abutting scale 16 has the first lateral surface 161 spaced from the second lateral surface 162. The recess 171 has a shoulder 174 formed at an upper portion close to the second lateral wall 173 so as to be engageable with a lower surface of the overhang 164 from below. The recess 171 has an elastic material 175 fitted into the second lateral wall 173 under the shoulder 174.

In this embodiment, the movable abutting scale 17 has a stopper 176 accommodated therein so that the stopper is constantly pressed against and urges the first lateral surface 161 of the fixed abutting scale 16 from a side close to the second lateral wall 172 of the recess 171, the fixed abutting scale 16 being engaged with the recess 171.

Thus, the stopper 176 is pressed against the fixed abutting scale 16 to press the second lateral surface 162 of the fixed abutting scale 16 against the second lateral wall 173 of the recess 171.

In the shown embodiment, the movable abutting scale 17 has a chamber 177 formed in a position close to the first lateral wall 172 of the recess 171 in order to accommodate the stopper 176, the chamber communicating with the recess 171. The chamber 177 has a helical compression spring 178 housed therein, and the helical compression spring constantly protrudes a front edge 176a of the stopper 176 from the chamber 177 into the recess 171 to push the front edge against the first lateral surface 161 of the fixed abutting scale 16.

In this embodiment, by this arrangement, the movable abutting scale 17 can be set so as to form a right angle with the fixed abutting scale 16 at a desired position in the longitudinal direction of the fixed abutting scale 16 since the second lateral wall 173 of the recess 171 is pressed against the second lateral surface 162 of the fixed abutting scale 16 by the stopper 176, which is urged to be pressed against the first lateral surface 161 of the fixed abutting scale 16 (Fig. 15). When the movable abutting scale 17 thus set is shifted in a direction opposite the urging direction of the stopper 176, it is possible to release the pressure of the second lateral surface 162 of the fixed abutting scale 16 on the second lateral wall 173 of the recess 171 (Fig. 16). By maintaining the state wherein the pressure of the second lateral surface of the fixed abutting scale on the second lateral wall is released, the movable abutting scale 17 can be slidably moved to a desired position on the base 1, being guided by the fixed abutting scale 16. When the shifting operation of the movable abutting scale 17 against the urging force is stopped after completion of the slide movement, the fixed abutting scale 16 is again sandwiched between the stopper 176 and the second lateral wall 173 of the recess 171 by the urging force of the stopper 176, and the movable abutting scale 17 is stably set again at the desired position.

It should be noted that, in the shown embodiment, even if the movable abutting scale 17 is shifted in the direction against the urging force of the stopper 176, the shoulder 174 formed in the recess 171 of the movable abutting scale 17 is prevented from disengaging from the overhang 164 of the fixed abutting scale 16. Additionally, since the knurled surface 163, which is formed on the second lateral surface 162 of the fixed abutting scale 16, is caused to bite, by the urging force of the stopper 176, into the elastic material 174 fitted into the second lateral wall 173 of the recess 171, the movable abutting scale 17 can be set more stably. In the shown embodiment, the movable abutting scale 17 has a grip part for operation 179 formed as a ridge above the recess 171 therein. By making use of the grip part for operation, the movable abutting scale 17 can be shifted against the urging force of the stopper 176.

In the embodiment shown in Fig. 17 through Fig. 22, the second lateral surface 162 of the fixed abutting scale 16, which is located under the overhang 164, is formed as a flat surface.

A movable abutting scale 19 is configured to have a first lateral wall 192 facing the first lateral surface 161 of the fixed abutting scale 16, spaced from a second lateral wall 193 facing the second lateral surface 162 of the fixed abutting scale 16 in a recess 191 thereof by substantially the same pitch as the fixed abutting scale 16 have the first lateral surface 161 spaced from the second lateral surface 162. The height of the fixed abutting scale is substantially equal to the depth of the recess 191.

In the embodiment shown in Fig. 17 through Fig. 22, the movable abutting scale 19 has a stopper 197 and a button 198 accommodated in one end portion thereof, the stopper having a bumping part 197a constantly urged to be pressed against the overhang 164 of the fixed abutting scale 16 from below, and the button being pressed against the stopper 197 to press the stopper 197 downward against the urging force when the button is pressed in.

In the shown embodiment, the movable abutting scale 19 has a compartment 194 for accommodating the stopper 197, formed in a portion of the recess 191 close to a second lateral wall 193 so as to communicate with the recess 191, and the bumping part 197a, which is formed on a lower portion of the stopper 197, is constantly pressed, from below, against the overhang 164 by a helical compression spring 195, which is accommodated in the chamber 194.

In the shown embodiment, the button 198 is also accommodated in the chamber 194 of the movable abutting scale 19 so as to be located at a higher position than the stopper 197. The button 198 has an inclined surface 198a formed on a lower portion thereof so as to mate with an inclined surface 197b, which is formed on an upper portion of the stopper 197. The button also has the operating part 198b projecting from a slot 196, which is formed in one lateral portion of the one end portion of the movable abutting scale 19. Both inclined surfaces 197b and 198a are set so that the operating part 198b of the button 198 is constantly protruded from the slot 196 by the spring 195 through the stopper 197 urged upward. The operating part 198b of the button 198, which projects from the slot 196, can be pressed into, carry out the above-mentioned push operation of the button 198. Specifically, when the operating part 198b of the button 198 is pressed in, the button 198 is laterally shifted to depress the stopper 197 due to a combination of both inclined surfaces 197b and 198a, releasing the pressure of the bumping part 197a on the overhang 164.

In this embodiment as well, by this arrangement, the movable abutting scale 19 can be set so as to form a right angle with the fixed abutting scale 16 at a desired position in the longitudinal direction of the fixed abutting scale 16 by the stopper 197, which is urged to press the bumping part 197a, from below, against the overhang 164 of the fixed abutting scale 16 (Fig. 17, Fig. 19 and Fig. 20). When the button 198 is pushed in from this state, it is possible to depress the stopper 197 against the urging force to release the pressure of the bumping part 197a of the stopper 197 on the overhang 164 (Fig. 21 and Fig. 22). By maintaining the state wherein the pressure of the bumping part on the overhang is released, the movable abutting scale 19 can be slidably moved to a desired position on the base 1, being guided by the fixed abutting scale 16. When the push operation of the button 198 is stopped after completion of the slide movement, the bumping part 197a of the stopper 197 is again pressed against the overhang 164 of the fixed abutting scale 16 by the urging force, and the movable abutting scale 19 is stably set again at the desired position.

In this embodiment, the stopper 197 has an elastic material 197c fitted into an upper surface of the bumping part 197a, and the bumping part 197a is pressed against a lower surface of the overhang 164 of the fixed abutting scale 16, having a high friction resistance.

Fig. 23 and Fig. 24 show an embodiment wherein the fixed abutting scale 16 is integrally molded of a synthetic resin by, e.g., injection molding and wherein the fixed abutting scale 16 thus molded is fitted to the top surface 10 of the base 1 and disposed on the base 1.

In this embodiment, the fixed abutting scale 16, which has a groove 165 formed therein so as to extend along the longitudinal direction thereof and to be opened at a lower end thereof, is fitted to the base 1, having the groove engaged with warp correction ribs 101, which are formed on the top surface 10 of the base so as to extend in a direction perpendicular to the retainer rail 2.

Specifically, in this embodiment, the fixed abutting scale 16 includes two lateral plates 166 and 166 extending along the longitudinal direction thereof, the two lateral plates 166 and 166 forming the groove 165 therebetween. The outer surface of one of the two lateral plates 166 and 166 serves as the first lateral surface 161, and the outer surface of the other lateral plate serves as the second lateral surface 162. The two lateral plates 166 and 166 have a plurality of bosses 167 formed therebetween so as to have a spacing between adjacent bosses 167 in the longitudinal direction of the fixed abutting scale 16, and the groove 165 is configured so as to be intermittently continuous by the providing of the bosses 167. On the other hand, the warp correction ribs 101 are dimensioned so as to have substantially the same width or a slightly narrower width than the groove 165. The warp correction ribs 101 are formed so as to be intermittently continuous in the direction perpendicular to the retainer rail. The base has holes 102 formed at discontinuities of the warp correction ribs 101 thereon so as to correspond the respective bosses 167. The fixed abutting scale 16 is assembled to the base 1 by engaging the warp correction ribs 101 with the groove 165 to fit the fixed abutting scale 16 to the top surface 10, followed by screwing bolts in the respective bosses 167 through the holes 102 from a rear side of the base 1.

When the fixed abutting scale 16 is integrally formed of a synthetic resin, the fixed abutting scale 16 is likely to be subjected to molding strain, being deformed in a curved shape, according to the length of the fixed abutting scale 16 as viewed in a plan view. If such molding strain is caused, the movable abutting scale 17 cannot be slidably moved along the fixed abutting scale 16, being parallel to the retainer rail 2 all the time. However, in this embodiment, even if the fixed abutting scale 16 is subjected to molding strain, the warp correction ribs 101, which are disposed on the top surface 10 of the base 1 so as to extend in the direction perpendicular to the retainer rail 2, allow the fixed abutting scale 16 to be disposed on the base 1 with the molding strain being corrected.

### (Retainer rail 2)

The retainer rail 2 is assembled to the base 1 so that the retainer has a lower surface serving as a sandwiching surface 22 for an object to cut S and that the retainer rail can be moved to a separating position with the sandwiching surface 22 being away from the support surface 11 of the base 1, from a sandwiching position wherein the object to cut S, which is put on the support surface 11, is sandwiched between the sandwiching surface 22 and the support surface 11.

In the shown embodiment, the retainer rail 2 is configured so as be swingable between the sandwiching position with the sandwiching surface 22 facing downward and the separating position with the sandwiching surface facing upward by swingably combining arms 23 with bearings 18, the respective bearings being disposed at a corner of the first long side 12 and the first short side 13 of the base 1 and at a corner of the first long side 12 and a second short side 15 of the base, each of the arms having an arm leading edge assembled to each of both end portions of the retainer rail 2 and extending in a substantially horizontal direction toward the first long side 12, and each of the arms having an arm base end formed with a pivotal portion 231. In the shown embodiment, the retainer rail 2 is configured to be capable of being swung from the sandwiching position toward a lateral direction of the first long side 12 of the base 1 (in the direction indicated by an arrow in Fig. 1). The object to cut S can be sandwiched between the sandwiching surface 22 and the support surface 11 by setting the object to cut S on the support surface 11 with the retainer rail set at the separating position, followed by swinging the retainer rail 2 to the sandwiching position (Fig. 3).

The retainer rail 2 is uniformly formed in section along a width direction thereof at every part throughout the longitudinal direction thereof.

In the shown embodiment, the retainer rail 2 includes a backboard 24 vertically extending in the sandwiching position, a lower plate 25 projecting from a lower end of the backboard 24 toward the first long side 12 of the base 1, and an upper plate 26 projecting from an upper end of the backboard 24 toward the first long side 12 of the base 1 and having a shorter projection length than the lower plate 25. The lower plate 25 has a lower surface serving as the sandwiching surface 22.

The upper plate 26 has a folded-back portion 261 formed at a front end thereof so as to project downward, and the lower plate 25 has a first projection plate 251 formed thereon just under the folded-back portion 261 so as to project upward from an upper surface thereof. The slider 3 can be regularly and slidably moved along the longitudinal direction of the retainer rail 2 in such a state that the slider base 31 has an engagement portion 311a stated later, accommodated in an accommodation space 27 defined by the folded-back portion 261, the first projection plate 251 and a front surface of the backboard 24.

The lower plate 25 has a second projection plate 252 formed on a front end thereof so as to project upward. The rotary blade 30, which is accommodated in the slider 3 and will be described later, is positioned so as to has a rear surface of a lower end 301 brought into contact with an outer surface of the second projection plate 252 (Fig. 3).

### (Slider 3)

The slider 3 is combined with a front side portion 20 of the retainer rail 2 so as to be capable of being slidably movable along the retainer rail 2. The rotary blade 30, which is accommodated in the slider 3 and is formed in a circular plate, cuts the object to cut S sandwiched as stated above when the slider 3 is slidably moved. Specifically, when the mount, which will be stated later, is depressed against an urging device 33 with the retainer rail 2 set in the sandwiching position, the lower end 301 of the rotary blade 30 (the cutting edge positioned at a lower side) is protruded downward from the sandwiching surface 22 of the retainer rail 2. When the slider 3 is slidably moved with the lower edge 301 of the rotary blade 30 protruded as stated above, the rotary blade 30 is rotated. As a result, the object to cut S is cut along the front edge of the retainer rail 2, i.e., a front end position of the second projection plate 252 of the lower plate 25, by the rotary blade 30 rotated stated above. The support surface 11 has a cutter mat 112 fitted thereinto at a position just under the lower end 301 of the rotary blade 30, the cutter mat being made of a soft plastic material.

The slider 3 includes:
the slider base 31 having the engageable portion 311a engageable with the front side portion 20 of the retainer rail 2;
the mount 32 combined with the slider base 31 so as to be vertically movable and having a front surface 321, the front surface having a shaft 322 to be fitted into a shaft hole 302 formed in a central portion of the rotary blade 30;
the urging device 33, which constantly urges the mount 32 toward a lifting position (the position shown in Fig. 3) wherein the lower end 301 of the rotary blade 30 mounted to the mount 32 is prevented from projecting downward from the sandwiching surface 22 of the retainer rail 2; and
the slider cover 34 detachably combined with the slider base 31 so as to cover the front surface 321 of the mount 32.

In the shown embodiment, the slider base 31 comprises a rear part 311 having the engageable portion 311a formed on a lower rear surface thereof and a front part 312 assembled to a front surface of the rear part 311 so as to sandwich and hold the mount 32 between the rear part 311 and the front part so that the mount is vertically movable. The slider base 31 has an upper portion positioned at a higher level than the upper plate 26 of the retainer rail 2.

The mount 32 includes the shaft 322 disposed at a lower front portion of the front surface 321 so as to project in a horizontal direction. The mount 32 has shoulders 323 formed on both sides of the rotary blade 30 on a lower portion of the front surface 321 so as to face upward, and the mount 32 also has shoulders 323 formed on a lower rear surface so as to face upward. In the shown embodiment, the lifting position of the mount 32 is a position that the urging force stated above is utilized to press these shoulders 323 against shoulders 313 formed on the slider base 31 so as to face downward. In the lifting position, an upper portion of the mount 32 is positioned at a higher level than an upper surface of the slider base 31 (Fig. 3). The rotary blade 30, which is supported by the mount 32, has a portion close to the lower edge 301 positioned at a lower level than a lower surface of the mount 32, and the rear surface of the rotary blade 30 is positioned forward of a front edge 311c of a bottom plate 311b of the rear part 311 of the slider face 31. The front part 312 of the slider base 31 is formed in an arched shape defined by lateral portions 312a disposed on both sides of the rotary blade 30, and an upper portion 312b extending between upper ends of the both lateral portions 312a and 31.2a. When the slider cover 34 is detached, the rotary blade 30, which is supported by the shaft 322, can be removed from the front surface 321 of the mount 32. The upper portion of the mount 32 has a cap 324 fitted thereto. The mount 32 can be depressed by pressing down the cap 324 by, e.g., a hand.

The urging device 33 comprises helical compression springs 331 having an upper end brought into contact with a lower surface of a bottom portion 327 of the mount 32 and having a lower end brought into contact with a bottom plate 311b of the rear part 311 of the slider base 31 in the shown embodiment.

The slider 34 contains:
a button 342 combined with the slider cover 34 so as to be slidably movable between an engagement position and a disengagement position and having engageable legs 342a projecting from a rear surface of the slider cover 34; and
an urging device 343, which normally urges the button 342 toward the engagement position (the position shown in Fig. 6).

In the shown embodiment, the slider cover 34 is configured so that the button 342, which is formed in a bar shape, is sandwiched and held so as to be slidably movable between a front part 344 and a rear part 345 of the slider cover. The button 342 has an outer end 342c outwardly projecting from a slot 344a formed in one of the lateral portions of the front part 344. A helical compression spring 343a, which serves as the urging device 343, is interposed between an inner end 342d of the button 324 and an inner surface of the other lateral portion of the front part 344, and the button 342 is set in the engagement position by the spring 343a. The button 342 has the paired engageable legs 342a and 342a formed on a rear surface so as to be spaced from each other in a longitudinal direction thereof and to project backward. Each of the engageable legs 342a has an engageable pawl 342b formed on a leading edge thereof so as to face toward the outer edge 342c of the button 342. The rear part 345 has slots 345a formed therein, each of the slots being large enough for a corresponding engageable leg 342a projecting therefrom and being wide enough for the button 342 to be moved against the urging force of the spring 343a, i.e., for the corresponding engageable leg 342a to be moved by pressing the outer edge 342c of the button 342 to displace the button 342 toward the disengagement position (a position wherein the engageable legs 342a are pressed against left edges of the respective slots 345a in Fig. 6).

On the other hand, the slider base 31 has engageable holes 312c formed in a front surface thereof so as to receive the engageable legs 342a of the button displaced in the disengagement position and to be engaged with the engageable legs 342a by displacement of the button 342 into the engagement position by the urging force of the urging device after receipt in the engageable holes.

In the shown embodiment, the engageable holes 312c are formed in both lateral portions 312a and 312a of the front part 312 of the slider base 31, respectively. In the shown embodiment, when the button 342 is set in the engagement position, the engageable pawls 342b of the engageable legs 342a are engaged with edges of the respective engageable holes 312c on an inner surface side of the front part 312. When the button 342 is displaced from this engaged state to the disengagement position, the engagement of the engageable pawls 342b with the engageable holes 312c can be released to remove the slider cover 34 from a front side of the slider base 31.

The rear part 345 of the slider cover 34 has a ridge 345b formed at a substantially central position thereof in right and left directions so as to be located between the paired lateral portion 312a and 312a of the front part 312 of the slider base 31 and to be brought into contact with a front side of the rotary blade 30. The ridge 345b has an elongated slot 345c formed therein so as to receive the shaft 322 of the mount 32 and to have such a vertical length to accept displacement of the shaft 322 caused by pressing operation of the mount 32.

In this embodiment, by this arrangement, when the button 342 is pushed to be slidably displaced toward the disengagement position against the urging force of the urging device 343, the slider cover 34 can be detached from the slider base 31 by one-touch operation. By this operation, the rotary blade 30, which is supported by the mount 32, can be released from capture by the slider cover 34, easily bringing about a state to exchange the rotary blade 30 for a new one. After exchange of the rotary blade 30, the button 342 is pressed into the disengagement position, and the engageable legs 342a of the button 342 are introduced into the engageable holes 312c of the slider base 31. When the button is released from this pressing operation, the button 342 is slidably displaced to the engagement position by the urging force of the urging device, brining about, by one-touch operation, a state with the new rotary blade 30 captured by the slider cover 34.

In this embodiment, the cutter includes a replacement tool 4 for the rotary blade 30, which has a permanent magnet 40 disposed on one end thereof and a gripper 41 formed on a portion close to the other end thereof.

In the shown embodiment, the replacement tool 4 is configured by integrally forming a holding plate 43 on one end of a bar-shaped member 42, the holding plate having a holding surface 43a for the permanent magnet 40 formed in a direction substantially perpendicular to the axis of the bar-shaped member 42. The holding plate 43 has a dented portion 44 formed therein so as to be open outward at one side of the holding plate 43 and to extend inside the holding plate 43. In the shown embodiment, the permanent magnet 40 comprises a rubber magnet, which has one side bonded to the holding surface 43a and is formed in a sheet-like shape. In the shown embodiment, the replacement tool is configured to be capable of attracting the front side of the rotary blade 30 to the other side of the rubber magnet with the dented portion 44 being alignment with the shaft hole 302 formed in the rotary blade 30, which is made of a magnetic material (Fig. 7).

By this arrangement, in this embodiment, the rotary blade 30, which is supported by the front surface 321 of the mount 32, can be detached from the mount 32 without being touched by a hand, by causing the permanent magnet 40 of the replacement tool 4 to attract the front side of the rotary blade 30, followed by moving the rotary blade 30 forward so as to dismount the shaft 322 of the mount 33 from the shaft hole of the rotary blade 30. After that, a new rotary blade 30 can be set on the shaft 322 of the mount 32 without being touched by a hand, by causing the permanent magnet 40 of the replacement tool 4 to attract the front side of the new rotary blade 30. After setting, only the new rotary blade 30 can stay on the front surface 321 of the mount 32 by operating the replacement tool 4 so as to rip the permanent magnet 40 from the front side of the new rotary blade 30.

In this embodiment, the slider base 31 includes the slider lock 314, which comprises a head portion for operation 314a and the leg portion 314b, and which is combined with the slide base 31 so as to be selectively and slidably displaced between a locked position and an unlocked position.

In the shown embodiment, the slider lock 314 is configured to have the head portion for operation 314a formed on an external end, an outwardly extending flange 341c formed thereon at a position close to the head portion for operation 314a, and the leg portion 314b formed in a bar shape so as to extend from the flange 314c. The rear part 311 of the slider base 31 has a through hole 311d formed in an upper rear potion thereof so that the leg portion 314b of the slider lock 314, which extends from the flange 314c, can pass through the through hole. The through hole 311d has a lateral width set so as to be greater than the width of the leg portion 314b of the slider lock 314 so that the slider lock 314 can be selectively and slidably displaced between the locked position and the unlocked position. In the shown embodiment, the rear part 311 is configured to have a cover 315 assembled to the upper rear portion, the cover having a slot 315a formed therein so that the slider lock 314 thus assembled can be operated from outside through the head portion for operation 314a.

On the other hand, the mount 32 includes an upper compartment 325a and a lower compartment 325b, and has the passage 325 formed between the compartment 325a and the lower compartment 325b therein so as to receive the leg portion 314b of the slider lock 314, the passage 325 including the locking shoulder 325c facing downward.

In the shown embodiment, the upper compartment 325a, which is defined by lateral portions 326 and an upper portion 328 of the mount 32, and the lower compartment 325b, which communicates with the upper compartment 325a, are formed in a rear portion of the mount 32 so as to be open on a rear side. The upper compartment 325a is configured to have a shorter width than the lower compartment 325b, providing the locking shoulder 325c between the upper compartment 325a and the lower compartment 325b so as to face downward.

In this embodiment, the leg portion 314b of the slider lock 314 is located under the locking shoulder 325C in the lower compartment 325b of the passage 325 when the slider lock 314 is set in the locked position. When the slider lock 314 is set in the unlocked position, the leg portion 314b of the slider lock 314 is located so as to be capable of being inserted into the upper compartment 325a of the passage 325 by depressing the mount 32 toward a lower position against the urging force of the urging device 33.

Specifically, in the shown embodiment, the leg portion 314b of the slider lock 314, which is positioned in the passage 325 through the through hole 311d, is located under the locking shoulder 325c in the locked position where the heat portion for operation 314a of the slider lock 314 is set on a right side in Fig. 11. When the slider lock 314 is slidably moved so that the head portion for operation 314a of the slider lock 314 is set on a left side from the locked position, the leg portion 314b is positioned under the upper compartment 325a (Fig. 12).

When the slider lock 314 is set in the locked position, the leg portion 314b of the slider lock is located under the locking shoulder 325c to prevent the mount 32 from being displaced even if the mount, which is set at a lifted position by the urging force of the urging means 33, is depressed against the urging force. By this arrangement, the lower edge 301 of the rotary blade 30 can be prevented from projecting downward from the sandwiching surface 22 of the retainer rail 2 even if the mount 32 is inadvertently depressed when it is not necessary to cut an object to cut S. In particular, when the retainer rail 2 is moved to a separating position with the sandwiching surface 22 being away from the support surface 11, the lower edge 301 of the rotary blade 30 (facing upward when the retainer rail 2 is set at such a separating position) can be prevented from projecting from the sandwiching surface 22.

When the mount 32, which is set in the lifted position by the urging force of the urging means 33, is depressed against the urging force while the slider lock 314 is set in the unlocked position, the mount 32 is displaced to protrude the leading edge 301 of the rotary blade 30 from the sandwiching surface 22 of the retainer rail 2 since the leg portion 314b is set in a position to be capable of being inserted into the upper compartment 325a (Fig. 4). When the slider 3 is moved along the retainer rail 2 in this state, it is possible to cut an object to cut S, which is retained by the retainer rail 2, which is set in the sandwiching position.

## Claims

1. A paper cutter, comprising:
a base having a support surface formed on a top surface thereof so as to put a sheet-like object to cut thereon;
a retainer rail having a lower surface serving as a sandwiching surface for the object, the retainer rail assembled to the base so as to be movable between a sandwiching position wherein the object put on the support surface is sandwiched between the sandwiching surface and the support surface and a separating position wherein the sandwiching surface and the support surface are pulled away from each other; and
a slider combined with the retainer rail so as to be slidably movable along the retainer rail;
whereby the slider is slidably moved to cut the sandwiched object by a rotary blade accommodated in the slider and formed in a circular shape;
the paper cutter further comprising:
a fixed abutting scale made of a synthetic resin and extending on the top surface of the base in a direction perpendicular to the retainer rail; and
a movable abutting scale extending parallel to the retainer rail, the movable abutting scale being slidably movable for obtaining a variable pitch between the retainer rail and the movable abutting scale;
wherein the fixed abutting scale and the movable abutting scale are combined so that the fixed abutting scale is engaged with a recess formed in one end portion of the movable abutting scale and opened at a lower surface of the movable abutting scale; and
wherein the fixed abutting scale is combined with the base so that warp correction ribs are fitted into a groove;
the groove extending along a longitudinal direction of the fixed abutting scale and opened at a lower end of the fixed abutting scale; and
the warp correction ribs being formed on the top surface of the base and extending in a direction perpendicular to the retainer rail.

2. The paper cutter according to Claim 1, wherein the movable abutting scale has a stopper accommodated therein so that the stopper is urged so as to be constantly pressed against a first lateral surface of the fixed abutting scale from a side close to a first lateral wall of the recess, with which the fixed abutting scale being engaged
whereby the stopper is pressed against the fixed abutting scale to press a second lateral surface of the fixed abutting scale against a second lateral wall of the recess.

3. The paper cutter according to Claim 1, wherein the fixed abutting scale has an overhang formed on an upper portion thereof in an entire longitudinal direction thereof;
wherein the movable abutting scale has a stopper and a button accommodated in one end portion thereof, the stopper having a bumping part constantly urged to be pressed against the overhang of the fixed abutting scale from below, and
the button being pressed against the stopper to press the stopper downward against the urging force when the button is depressed.

4. The paper cutter according to any one of Claims 1 to 3, further comprising the top surface of the base having a dimple formed thereon at a corner for easy engagement with a finger, the corner being positioned at an intersection where a first side of the object to cut, which is parallel to the retainer rail disposed on the top surface, a second side of the object to cut, which is adjacent the first side and perpendicular to the retainer rail, and the object having one side perpendicular to the retainer rail positioned to the fixed abutting scale.

5. The paper cutter according to any one of Claims 1 to 4, wherein the slider comprises:
a slider base including an engageable portion engageable with the retainer rail;
a mount combined with the slider base so as to be vertically movable and including a shaft, which is fitted into a shaft hole formed in a front central portion of the rotary blade, and which rotatably supports the rotary blade;
an urging device, which constantly urges the mount toward a lifted position wherein a cutting edge of the rotary blade, which is mounted to the mount, is prevented from projecting from the sandwiching surface of the retainer rail; and
a slider cover detachably combined with the slider base so as to cover a front side of the slider base;
the slider base further including a slider lock, the slider lock comprising a head portion for operation and a leg portion and being combined with the slide base so as to be selectively and slidably displaced between a locked position and an unlocked position;
the mount having a passage formed therein, the passage comprising au upper compartment, a lower compartment, and a locking shoulder formed between the upper compartment and the lower compartment so as to receive the leg portion of the slider lock, the locking shoulder facing downward;
whereby when the slider lock is set in the locked position, the leg portion of the slider lock is located under the locking shoulder in the lower compartment of the passage, and when the slider lock is set in the unlocked position, the leg portion of the slider lock is located so as to be capable of being inserted into the upper compartment of the passage by depressing the mount toward a lower position against an urging force of the urging device.

6. The paper cutter according to Claim 5, wherein the slider cover accommodates:
a button combined with the slider cover so as to be selectively and slidably displaced between an engagement position and a disengagement position, and having an engageable leg projecting from a rear surface of the slider cover; and
an urging device, which constantly urges the button toward the engagement position;
the slide base having an engageable hole formed in a front surface thereof so as to receive an engageable leg of the button displaced to the disengagement position and so as to be engaged with the engageable leg when the button is moved to the engagement position by an urging force of the urging device.

7. The paper cutter according to Claim 5 or 6, further comprising a replacement tool for the rotary blade, which has a permanent magnet disposed on one end portion thereof to be attracted to a front side of the rotary blade and a gripper formed on a portion close to the other end thereof.
